# EUROPEAN PATENT APPLICATION

(11) **EP 4 768 286 A1**
(43) Date of publication of application: **01.07.2026**
(21) Application number: 24930612.7
(22) Date of filing: 31.12.2024
(51) Int. Cl.: B60H 1/00

(54) **AIR DISCHARGE CONTROL METHOD AND DEVICE FOR AUTOMOTIVE AIR CONDITIONING, AND COMPUTER-READBALE STORAGE MEDIUM**

(30) Priority: 18.03.2024 CN 202410306932
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: LIANG, Changqiu, Hangzhou, Zhejiang 310000 (CN); WANG, Dacheng, Hangzhou, Zhejiang 310000 (CN); XU, Zhenyuan, Hangzhou, Zhejiang 310000 (CN); LIAO, Huihong, Hangzhou, Zhejiang 310000 (CN); ZHOU, Dayong, Hangzhou, Zhejiang 310000 (CN)
(74) Representative: Elzaburu S.L.P.
(86) International application number: PCT/CN2024/144156
(87) International publication number: WO 2025/194956

(57) **Abstract**

The present application discloses an air discharge control method and a device for automotive air conditioning, and a computer-readable storage medium, belonging to the technical field of air conditioning control. The method includes: determining a target position where an occupant is present and a riding posture corresponding to the target position; determining a target air outlet according to a row area where the target position is located; determining an air discharge direction and an air discharge volume corresponding to each target air outlet according to the target position and/or the riding posture; and controlling the target air outlet to perform an air discharge action according to the air discharge direction and the air discharge volume.

## Description

### CROSS-REFERENCE TO RELATED APPLICATIONS

The present application claims priority to Chinese Patent Application No. 202410306932.2 filed on March 18, 2024, the entire contents of which are incorporated herein by reference.

### TECHNICAL FIELD

The present application relates to the technical field of air conditioning control, and in particular to an air discharge control method and a device for automotive air conditioning, and a computer-readable storage medium.

### BACKGROUND

In the design of automotive air conditioning systems, it is necessary to adjust the parameters of the air outlet according to the actual situation to meet the thermal comfort requirements of occupants, so as to provide a comfortable riding environment for occupants.

In the related art, the comfort state of the automotive is usually adjusted based on an automatic air conditioning system, that is, the parameters of the air outlet to be adjusted are determined according to the sensor data of temperature, humidity, air quality, etc. in the automotive, and then all air outlets in the entire automotive are uniformly adjusted according to the parameters, so as to maintain the balanced circulation of air in the automotive, avoid local over-high or over-low temperature, and achieve the best comfort.

However, the above adjustment method pursues the temperature uniformity of the internal environment, which means that the automatic air conditioning system will continuously adjust the parameters of all air outlets until the temperature of the entire automotive reaches the comfortable temperature, which undoubtedly causes huge energy consumption.

The above content is only used to assist in understanding the technical solution of the present application, and does not represent an admission that the above content is prior art.

### SUMMARY

The main purpose of the present application is to provide an air discharge control method and a device for automotive air conditioning, and a computer-readable storage medium, aiming to solve the technical problem of high energy consumption in the existing control method.

To achieve the above purpose, the present application provides an air discharge control method for automotive air conditioning, and the air discharge control for automotive air conditioning includes the following steps:
determining a target position where an occupant is present and a riding posture corresponding to the target position;
determining a target air outlet according to a row area where the target position is located;
determining an air discharge direction and an air discharge volume corresponding to each target air outlet according to the target position and/or the riding posture; and
controlling the target air outlet to perform an air discharge action according to the air discharge direction and the air discharge volume.

In an embodiment, the step of determining the air discharge direction and the air discharge volume corresponding to each target air outlet according to the target position and/or the riding posture includes:
in response to that the riding posture is a normal posture, determining the air discharge direction and the air discharge volume corresponding to each target air outlet according to the target position and/or the normal posture;
in response to that the riding posture is a non-normal posture, adjusting the target air outlet according to associated parameters of the non-normal posture, and determining the air discharge direction and the air discharge volume corresponding to each target air outlet.

In an embodiment, the step of determining the air discharge direction and the air discharge volume corresponding to each target air outlet according to the target position and/or the riding posture includes:
in response to that an amount of the target position is a full-load amount, taking a default air direction associated with each target air outlet as the air discharge direction;
in response to that the amount of the target position is a non-full-load amount, determining an unoccupied position according to the row area and the target position;
taking the default air direction associated with each target air outlet at the target position as the air discharge direction, and determining an air discharge direction corresponding to each target air outlet at the unoccupied position according to a relative positional relationship between the unoccupied position and the target position;
determining the air discharge volume according to a separation distance between the target position and the target air outlet.

In an embodiment, the step of determining the air discharge volume according to the separation distance between the target position and the target air outlet includes:
dividing the target air outlet into a main air outlet and an auxiliary air outlet according to the separation distance between the target position and the target air outlet;
setting an air discharge volume of the main air outlet as a first calibration value, and setting an air discharge volume of the auxiliary air outlet as a second calibration value, where the first calibration value is less than the second calibration value.

In an embodiment, after the step of controlling the target air outlet to perform the air discharge action according to the air discharge direction and the air discharge volume, the method further includes:
in response to that a temperature difference at the target position is greater than a first preset temperature difference within a first preset period, adjusting the air discharge volume of the auxiliary air outlet according to a preset increment until the temperature difference at the target position is less than a second preset temperature difference within a second preset period.

In an embodiment, the target air outlet includes at least one of a front air outlet, a ceiling air outlet and a rear air outlet.

In an embodiment, after the step of controlling the target air outlet to perform the air discharge action according to the air discharge direction and the air discharge volume, the method includes:
in response to detecting that the riding posture is switched to a reverse posture, determining a headrest area associated with the target position;
setting an air discharge direction of the front air outlet to an outer side of the headrest area, and setting an air discharge direction of other target air outlets as a center of the headrest area.

In an embodiment, the step of determining the target position where an occupant is present and the riding posture corresponding to the target position includes:
acquiring seat weighing data and image collection data of all areas;
determining the target position where the occupant is present according to a weight change of the seat weighing data; and
determining the riding posture corresponding to the target position according to a face detection in the image collection data.

In addition, to achieve the above purpose, the present application further provides an air discharge control device for automotive air conditioning, including: a memory, a processor, and an air discharge control program for automotive air conditioning stored on the memory and operable on the processor. The air discharge control program for automotive air conditioning is configured to implement the steps of the air discharge control method for automotive air conditioning.

In addition, to achieve the above purpose, the present application further provides a computer-readable storage medium, the computer-readable storage medium stores an air discharge control program for automotive air conditioning, and the air discharge control program for automotive air conditioning is executed by a processor to implement the steps of the air discharge control method for automotive air conditioning.

In a technical solution provided by the present application, different from the unified adjustment of all air outlets in the related art, this solution is actually a local control, that is, the air receiving condition required by the occupant is determined according to the position or posture, then the target air outlet is selectively opened, and the air direction and air volume of the air outlet are selectively adjusted. Such an arrangement can not only make the occupant feel comfortable air supply and meet the comfort demand, but also reduce unnecessary air supply, thereby saving energy consumption and reducing the operating cost of the air conditioning system.

### BRIEF DESCRIPTION OF THE DRAWINGS

FIG. 1 is a schematic flow chart of an air discharge control method for automotive air conditioning according to a first embodiment of the present application.
FIG. 2 is a schematic flow chart of step S11 in the air discharge control method for automotive air conditioning according to the first embodiment of the present application.
FIG. 3 is a schematic view of a division of a front seating area in the air discharge control method for automotive air conditioning according to the first embodiment of the present application.
FIG. 4 is a schematic view of the division of the front seating area in the air discharge control method for automotive air conditioning according to the first embodiment of the present application.
FIG. 5 is a schematic view of a division of a rear seating area in the air discharge control method for automotive air conditioning according to the first embodiment of the present application.
FIG. 6 is a schematic view of the division of the rear seating area in the air discharge control method for automotive air conditioning according to the first embodiment of the present application.
FIG. 7 is a schematic flow chart of the air discharge control method for automotive air conditioning according to a second embodiment of the present application.
FIG. 8 is a side view of a semi-recumbent posture in the air discharge control method for automotive air conditioning according to the second embodiment of the present application.
FIG. 9 is a top view of the semi-recumbent posture in the air discharge control method for automotive air conditioning according to the second embodiment of the present application.
FIG. 10 is a top view of the semi-recumbent posture in the air discharge control method for automotive air conditioning according to the second embodiment of the present application.
FIG. 11 is a side view of a reverse posture in the air discharge control method for automotive air conditioning according to the second embodiment of the present application.
FIG. 12 is a top view of the reverse posture in the air discharge control method for automotive air conditioning according to the second embodiment of the present application.
FIG. 13 is a side view of the reverse posture in the air discharge control method for automotive air conditioning according to the second embodiment of the present application.
FIG. 14 is a schematic flow chart of the air discharge control method for automotive air conditioning according to a third embodiment of the present application.
FIG. 15 is a schematic flow chart of step S34 in the air discharge control method for automotive air conditioning according to the second embodiment of the present application.
FIG. 16 is a schematic structural view of an air discharge control device for automotive air conditioning involved in a hardware operating environment of embodiments of the present application.

The realization of the purpose, functional characteristics and advantages of the present application will be further described with reference to the embodiments and the accompanying drawings.

### DETAILED DESCRIPTION OF THE EMBODIMENTS

It should be understood that the specific embodiments described herein are only used to explain the present application and are not used to limit the present application.

The arrangement of the automotive air conditioning system not only affects the comfort of occupants, but also affects the energy consumption of the entire automotive.

At present, the parameters of the air outlet are mainly adjusted manually by the occupant or automatically by the automatic air conditioning system to achieve the comfort state of the entire automotive.

However, whether it is manual adjustment or automatic adjustment, the adjustment object is all air outlets in the automotive. For example, as long as the average temperature in the automotive is not reduced to the set temperature, it is necessary to increase the air volume of all air outlets, which undoubtedly causes huge energy consumption.

To solve the above problems, this solution realizes local control according to the specific riding conditions in the automotive, so as to achieve the effect of saving energy consumption while meeting the thermal comfort demand.

To better understand the above technical solution, the exemplary embodiments of the present application will be described in more detail below with reference to the accompanying drawings. Although the exemplary embodiments of the present application are shown in the accompanying drawings, it should be understood that the present application can be implemented in various forms and should not be limited by the embodiments set forth herein. On the contrary, these embodiments are provided to enable a more thorough understanding of the present application and to fully convey the scope of the present application to those skilled in the art.

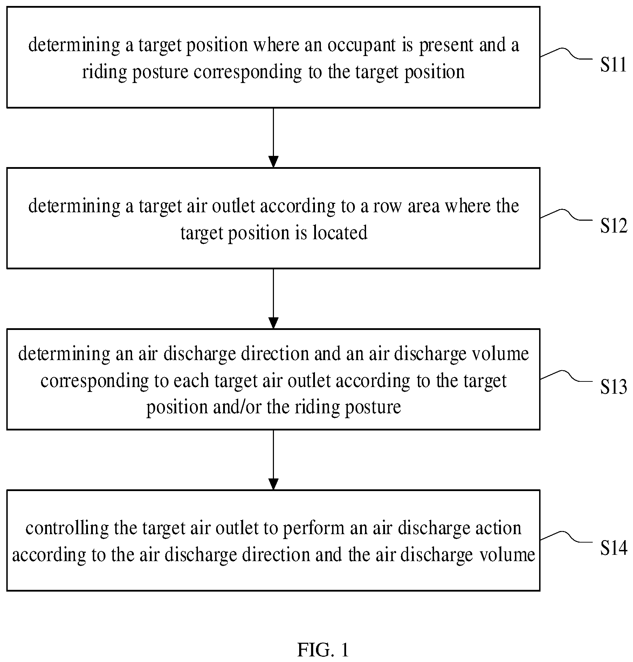

The embodiment of the present application provides an air discharge control method for automotive air conditioning, referring to FIG. 1, FIG. 1 is a schematic flow chart of an air discharge control method for automotive air conditioning according to a first embodiment of the present application.

In this embodiment, the air discharge control method for automotive air conditioning includes:
step S11, determining a target position where an occupant is present and a riding posture corresponding to the target position.

In the present application, the automotive is provided with at least one of an electric seat, an air conditioning assembly, a temperature sensor, an electric air outlet, a camera, a seat sensor, an infrared sensor, etc.

The target position refers to the current riding position of the occupant, including but not limited to the driver's seat, the co-pilot seat, the left rear seat, the middle rear seat, the right rear seat, etc. The riding posture refers to the current riding posture of the occupant, including but not limited to a normal posture, a semi-recumbent posture, a supine posture, a lateral posture, a reverse posture, etc.

On the one hand, the target position where the occupant is present is determined, and the specific determination method can adopt infrared recognition technology, image recognition technology, pressure monitoring technology, etc.

In an embodiment, the infrared sensor is used to continuously collect the infrared heat distribution data inside the automotive, which is represented as a heat distribution map. Since the heat emitted by the human body will produce specific hot spots, based on image processing algorithms, these hot spots can be identified and extracted, such as using edge detection, feature extraction and image segmentation technologies, to determine which hot spots are generated by the occupant's body, so as to locate the occupant's position.

On the other hand, the riding posture corresponding to the target position is determined, and the specific determination method can adopt infrared recognition technology, image recognition technology, pressure monitoring technology, etc.

In an embodiment, when the seat sensor includes a pressure sensor, the pressure data of the occupant on the seat is collected based on the pressure sensor. According to the pressure distribution, the features related to the occupant's riding posture are extracted, such as pressure distribution, pressure center point position, pressure change rate, etc., and then the occupant's riding posture is determined. For example, when it is sensed that the pressure distribution of the front and rear parts of the seat is uneven, it can be determined that the occupant may adopt a forward leaning or backward leaning sitting posture.

When the seat sensor is a posture sensor, the occupant's riding posture is determined according to the data such as the stroke of the seat in the X-axis, the angle of the backrest, the moving distance of the headrest, etc. For example, when the seat moves a specific distance in the X direction, the seat backrest tilts a specific angle, and the head X position is close to or exceeds the ceiling air outlet on the same side, it is determined that the occupant is in a semi-recumbent posture.

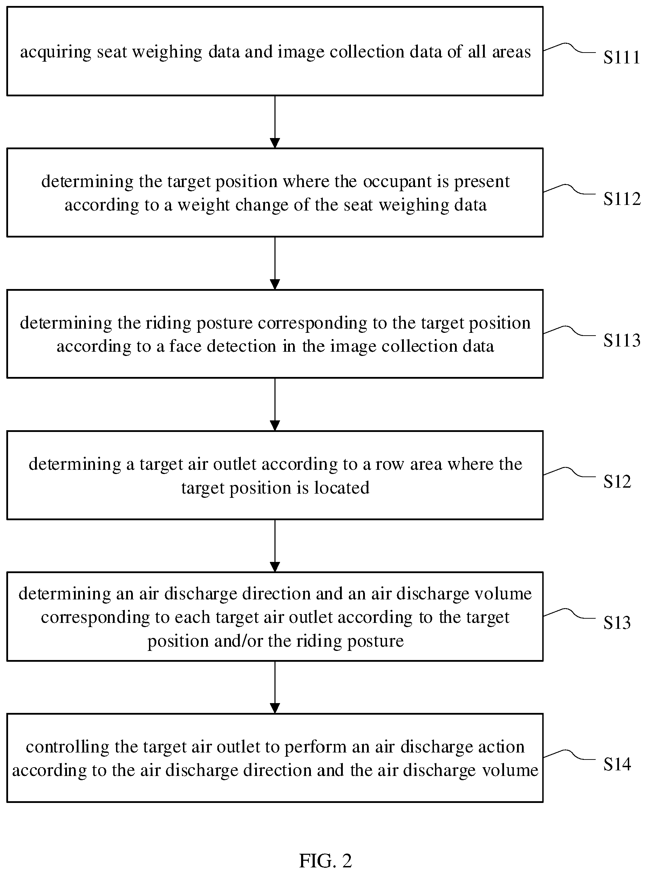

In an embodiment, referring to FIG. 2, step S11 includes:
step S111, acquiring seat weighing data and image collection data of all areas;
step S112, determining the target position where the occupant is present according to a weight change of the seat weighing data; and
step S113, determining the riding posture corresponding to the target position according to a face detection in the image collection data.

This solution combines the weighing sensor located on the seat and the camera located at the front of the automotive to analyze the position and posture of the occupant.

Each riding area is provided with a weighing sensor to collect the seat weighing data of all riding areas. In addition, a camera is installed at a specific position of the automotive to collect the images of the occupants in all riding areas.

In an embodiment, after acquiring the weighing data of the seat, the change of the weighing data is monitored in real time. When the weighing data of a certain seat suddenly increases, such as changing from 0kg to 60kg, it indicates that an occupant is seated, so the current position is set as the target position.

Further, computer vision technology and face detection algorithm are used to detect and recognize the face of the occupant at the target position. If no face is detected, it is determined that the occupant is in a reverse posture. If a face is detected, it indicates that the occupant is in a forward posture. At this time, the specific posture type can be further determined by analyzing the angle of the face, the position relative to the seat, the position relative to the air outlet, etc. For example, when the angle of the face is front, it is determined that the occupant is in a normal sitting posture.

This solution first determines the target area where the occupant is seated according to the weighing data, and then determines the riding posture in the target position according to the image collection data, that is, based on multi-dimensional data, a more accurate determination result is obtained. For example, when the occupant is in a reverse posture, if only a single-dimensional determination is made based on the image, the determination result is that there is no occupant, which is inconsistent with the actual situation. With this solution, it can be determined that there is an occupant in this area and the occupant is in a reverse posture, so the judgment result of this solution is more accurate.

Step S12, determining a target air outlet according to a row area where the target position is located.

According to the number of seat rows, the interior space of the automotive is divided into several row areas, such as the front seating area and the rear seating area.

In an embodiment, each riding position in the automotive is pre-associated with the row area to which it belongs. For example, both the driver's seat and the co-pilot seat belong to the front seating area. Based on this, the row area where the target position is located can be directly determined.

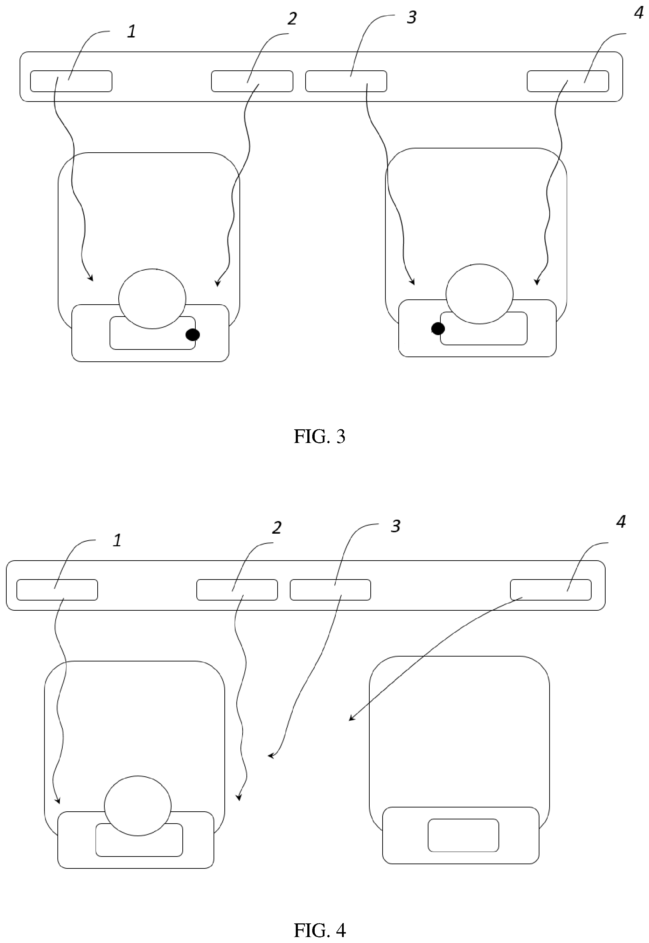

Referring to FIG. 3, the target positions are the driver's seat and the co-pilot seat, both of which are located in the front seating area. At this time, the air outlets corresponding to the front seating area, that is, front air outlets 1, 2, 3 and 4, are determined and set as the target air outlets. As shown in FIG. 4, when the only target position is the driver's seat, the seating area is also the front seating area, so all front air outlets are set as target air outlets, that is, 1, 2, 3 and 4. In addition to the above method, part of the front air outlets can also be selected as target air outlets, that is, 1, 2 and 3, which is not specifically limited in this embodiment.

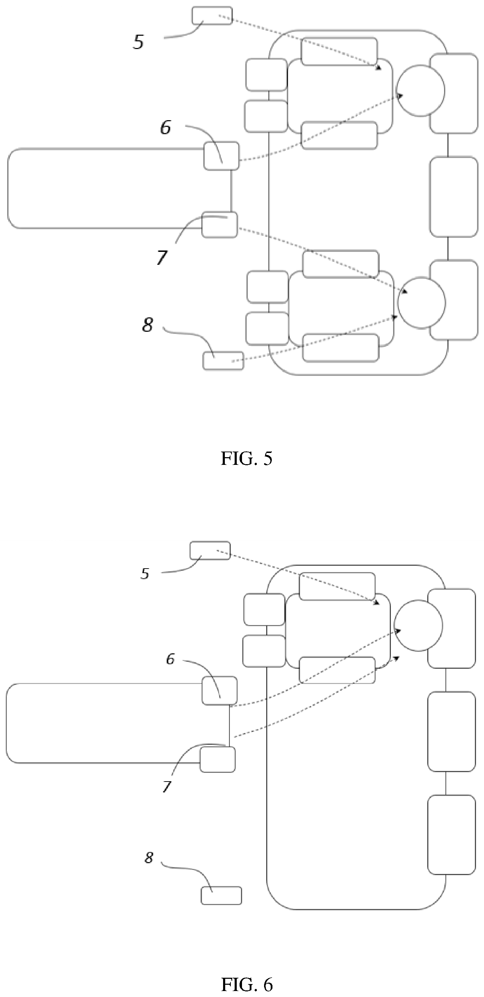

Referring to FIG. 5, the target position is located in the rear seating area. At this time, the air outlets corresponding to the rear seating area, that is, rear air outlets 5, 6, 7 and 8, are determined and set as the target air outlets. As shown in FIG. 6, rear air outlets 5, 6, 7 and 8 are also set as target air outlets.

In an embodiment, the target air outlet includes at least one of a front air outlet, a ceiling air outlet and a rear air outlet.

Step S13, determining an air discharge direction and an air discharge volume corresponding to each target air outlet according to the target position and/or the riding posture.

In an embodiment, the air discharge direction corresponding to the target air outlet is adjusted according to the target position, and computational fluid dynamics (CFD) simulation analysis can be specifically used to find the optimal air discharge direction to ensure that the air can cover the target position. For example, the air outlet of the driver's seat can be directed to the upper body of the occupant, and the air outlet of the co-pilot seat can be directed to the head and feet of the occupant. In addition, considering that the air supply parts required by the user are different under different riding postures, the accurate air discharge direction can be determined based on the pre-established mapping relationship between riding postures and air directions, such as normal posture-whole body, supine posture-half body, etc.

In an embodiment, the air discharge volume of each air outlet is determined according to the riding posture, and the air discharge volume can be specifically adjusted by adjusting the opening degree and wind speed of the air outlet. For example, when the user is in the supine posture, it indicates that the user may be sleeping, so the low wind gear can be associated at this time to avoid catching a cold due to direct blowing of strong wind. In addition, one or more parameters such as the relative positional relationship, separation distance, current temperature between the target air outlet and the target position can be considered to ensure that the occupant can feel comfortable air supply.

Step S14, controlling the target air outlet to perform an air discharge action according to the air discharge direction and the air discharge volume.

In an embodiment, the air conditioning assembly generates a control signal based on parameters such as the air discharge direction and air discharge volume, and transmits the signal to the motor-driven air doors, regulating valves and other actuating mechanisms of each target air outlet through electrical wiring. Correspondingly, after receiving the control signal, the actuating mechanism of the electric air outlet decodes it to identify the content of the control instruction, including parameters such as the air discharge direction and air discharge volume. According to the decoded control instruction, the actuating mechanism of the electric air outlet adjusts the air discharge direction and air discharge volume of the air outlet to meet the requirements of the control signal. Finally, the actuating mechanism can send a feedback signal to the air conditioning assembly to inform the actual execution status, such as whether the air outlet has reached the specified position, whether the air discharge volume has been adjusted to the specified value, etc.

People are relatively less sensitive to wind blowing on the face and are not easy to cause discomfort. However, the neck is one of the vital parts of the human body. The muscles, nerves and blood vessels of the neck are complex and sensitive to changes in temperature and wind, so it is easy to cause discomfort. Therefore, when the user is in a reverse posture, special attention should be paid to the air discharge direction of the air outlet to avoid direct blowing on the neck.
Step A, in response to detecting that the riding posture is switched to a reverse posture, determining a headrest area associated with the target position; and
Step B, setting an air discharge direction of the front air outlet to an outer side of the headrest area, and setting an air discharge direction of other target air outlets as a center of the headrest area.

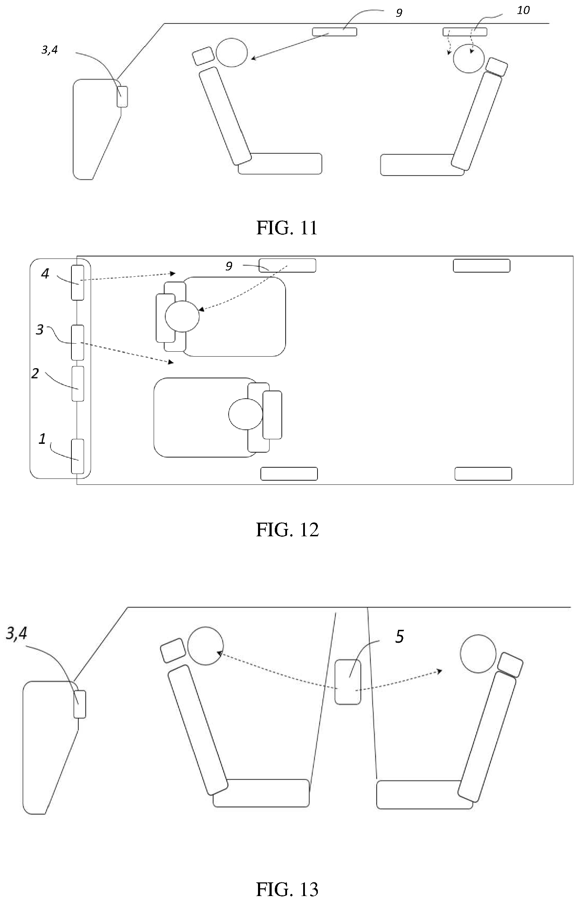

In an embodiment, when the riding posture is the reverse posture, the headrest area associated with the target position is determined. On this basis, the air direction of the front air outlet behind the occupant is set to the outer side of the headrest area, such as air outlets 3 and 4 in FIG. 12. As for other target air outlets, such as the air outlet 9, the air direction can be directly set to the center of the headrest area.

Controlling the front air outlet to blow directly on the face can quickly reduce the facial temperature in hot weather and improve the comfort of the occupant. In addition, controlling the rear air outlet to avoid blowing on the back of the neck can avoid discomfort and neck muscle tension caused by direct blowing on the neck, which also helps to improve the comfort of the occupant.

In a technical solution provided by this embodiment, different from the unified adjustment of all air outlets in the related art, this solution is actually a local control, that is, the air receiving condition required by the occupant is determined according to the position and posture, then the target air outlet is selectively opened, and the air direction and air volume of the target air outlet are selectively adjusted. Such an arrangement can not only make the occupant feel comfortable air supply and meet the comfort demand, but also reduce unnecessary air supply, thereby saving energy consumption and reducing the operating cost of the air conditioning system.

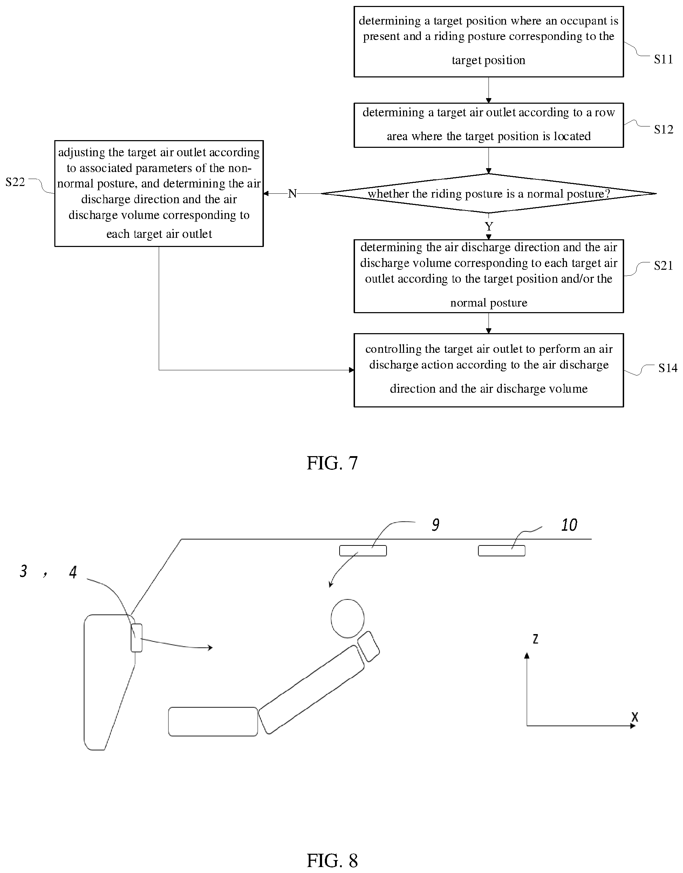

In an embodiment, referring to FIG. 7, a second embodiment of the air discharge control method for automotive air conditioning of the present application is provided. Based on the embodiment shown in FIG. 1 above, the step of determining the air discharge direction and the air discharge volume corresponding to each target air outlet according to the target position and/or the riding posture includes:
step S21: in response to that the riding posture is a normal posture, determining the air discharge direction and the air discharge volume corresponding to each target air outlet according to the target position and/or the normal posture.

All riding postures are divided into normal postures and non-normal postures. The normal posture is the normal sitting posture as shown in FIG. 3, and the non-normal postures include semi-recumbent postures, supine postures, lateral postures, reverse postures, etc.

When the riding posture is the normal posture, it is only necessary to open the target air outlet corresponding to the row area where the target position is located. For the setting of air discharge direction and air discharge volume, please refer to the first embodiment, which will not be repeated here.

Step S22, in response to that the riding posture is a non-normal posture, adjusting the target air outlet according to associated parameters of the non-normal posture, and determining the air discharge direction and the air discharge volume corresponding to each target air outlet.

When the riding posture is the non-normal posture, it may block the air flow path, resulting in the air cannot effectively cover the target position, so the target air outlet needs to be adjusted. For example, on the basis of opening the first target air outlet corresponding to the row area where the target position is located, it is also necessary to open the second target air outlet associated with the non-normal posture, such as a ceiling air outlet and/or a rear air outlet. In addition, part of the first target air outlet can be selectively closed according to the current number of occupants.

Exemplarily, for the semi-recumbent posture.

On the one hand, the air outlet corresponding to the target position is determined. It is known that there is no one in the driver's seat in the front seating area, so the corresponding air outlets 1 and 2 can be closed, and there is someone in the co-pilot seat, so the corresponding air outlets 3 and 4 need to be opened.

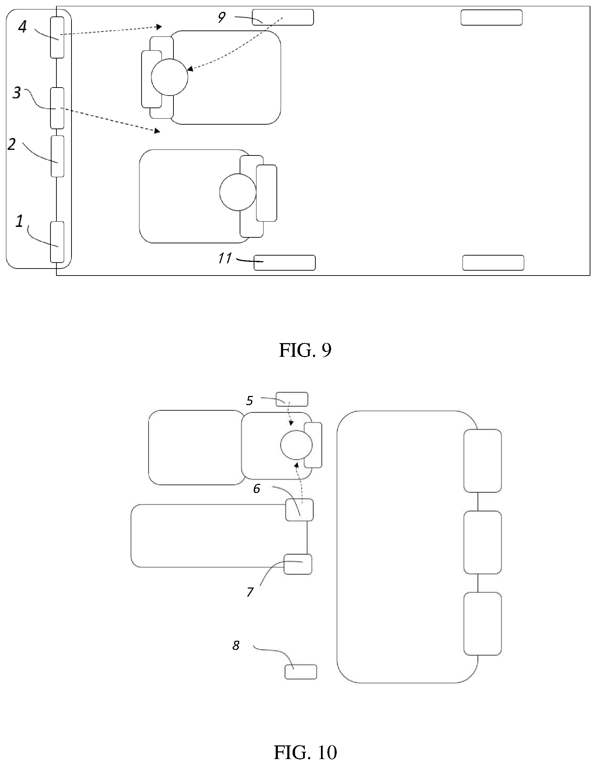

On the other hand, the air outlet corresponding to the non-normal posture is determined, such as the air outlet 9 in FIG. 8 and FIG. 9, which is the ceiling air outlet associated with the non-normal posture; and air outlets 5 and 6 in FIG. 10, which are the rear air outlets associated with the non-normal posture.

Exemplarily, for the reverse posture.

On the one hand, the air outlet corresponding to the target position is determined, that is, air outlets 3 and 4 corresponding to the co-pilot seat.

On the other hand, the air outlet corresponding to the non-normal posture is determined, such as air outlet 9 in FIG. 11 and FIG. 12, which is the ceiling air outlet corresponding to the non-normal posture; and the air outlet 5 in FIG. 13, which is the rear air outlet associated with the non-normal posture.

For the setting of air discharge direction and air discharge volume, please refer to the first embodiment. It is also necessary to pay attention to controlling the rear air outlet to avoid blowing on the back of the neck, and the specific principle is the same as that of the first embodiment.

In this solution, different methods are used to determine the target air outlet according to whether the current riding posture of the occupant is normal. In the normal posture, the front air outlet can provide sufficient air circulation to make the occupant feel comfortable. However, when the occupant adopts a non-normal posture, due to the change of the angle between the body and the seat, the front air outlet alone may not provide sufficient air circulation, resulting in discomfort for the occupant, so the assistance of other air outlets is needed. The air circulation provided by the ceiling air outlet can make up for the deficiency of the front air outlet in the semi-recumbent posture, making the occupant feel more comfortable. In short, under different riding postures, the different use of air conditioning air outlets can better adapt to the needs of occupants and provide a more comfortable riding experience.

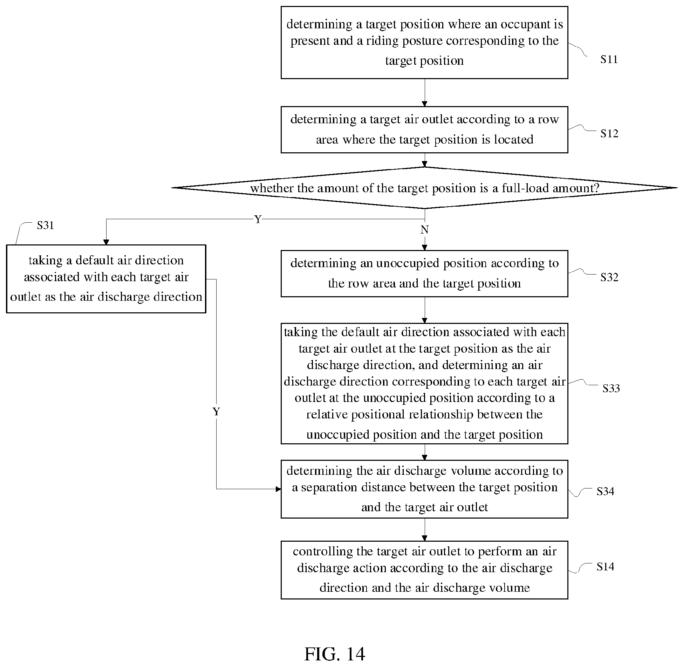

In an embodiment, referring to FIG. 14, a third embodiment of the air discharge control method for automotive air conditioning of the present application is provided. Based on the embodiment shown in FIG. 7 above, the step of determining the air discharge direction and the air discharge volume corresponding to each target air outlet according to the target position and/or the riding posture includes:

Step S31, in response to that an amount of the target position is a full-load amount, taking a default air direction associated with each target air outlet as the air discharge direction.

It is known that the target position refers to the current riding position of the occupant. One occupant corresponds to one target position, and two occupants correspond to two target positions, so the amount of target positions can represent the number of occupants, which is further divided into full-load amount and non-full-load amount.

Each air outlet is associated with a default air direction. As shown in FIG. 3, the default air directions of air outlets 1 and 2 are the driver's seat, and the default air directions of air outlets 3 and 4 are the co-pilot seat.

When the amount of the target positions is the full-load amount, the default air direction associated with each target air outlet is taken as its air discharge direction to ensure that all occupants in the automotive can obtain a comfortable ventilation effect.
Step S32, in response to that the amount of the target position is a non-full-load amount, determining an unoccupied position according to the row area and the target position; and
Step S33, taking the default air direction associated with each target air outlet at the target position as the air discharge direction, and determining an air discharge direction corresponding to each target air outlet at the unoccupied position according to a relative positional relationship between the unoccupied position and the target position.

When the amount of the target positions is the non-full-load amount, it indicates that there is no occupant at the default air direction of some air outlets. To save energy consumption, the air direction of these air outlets needs to be adjusted to the occupied area, so that the air can flow more concentratedly to the area with occupants. The specific solution is as follows.

Firstly, by determining the row area and the target position, it can be further determined which positions in the row area are unoccupied positions, that is, positions not occupied by occupants.

Then, since there is the occupant at the target position, for the target air outlet here, the associated default air direction can be directly taken as the air discharge direction. For the target air outlet at the unoccupied position, it is necessary to analyze the relative positional relationship between the unoccupied position and the target position, and determine the air discharge direction of each target air outlet at the unoccupied position.

Taking the front seating area as an example, when the target positions are the driver's seat and the co-pilot seat, it is necessary to control the air outlets 1 and 2 in front of the driver's seat to blow air to the driver's seat, and control the air outlets 3 and 4 in front of the co-pilot seat to blow air to the co-pilot seat. When the only target position is the driver's seat, it is necessary to control the air outlets 1 and 2 in front of the driver's seat to blow air to the driver's seat. As for the air outlets 3 and 4 in front of the co-pilot seat, since there is no one in the co-pilot direction which is the default air direction, to save energy consumption, the air directions of air outlets 3 and 4 can be set to the driver's seat direction.

Step S34, determining the air discharge volume according to a separation distance between the target position and the target air outlet.

In an embodiment, the air discharge volume currently required to be provided is determined according to the association relationship between the separation distance and the air discharge volume, such as the first calibration air volume, the second calibration air volume, etc.

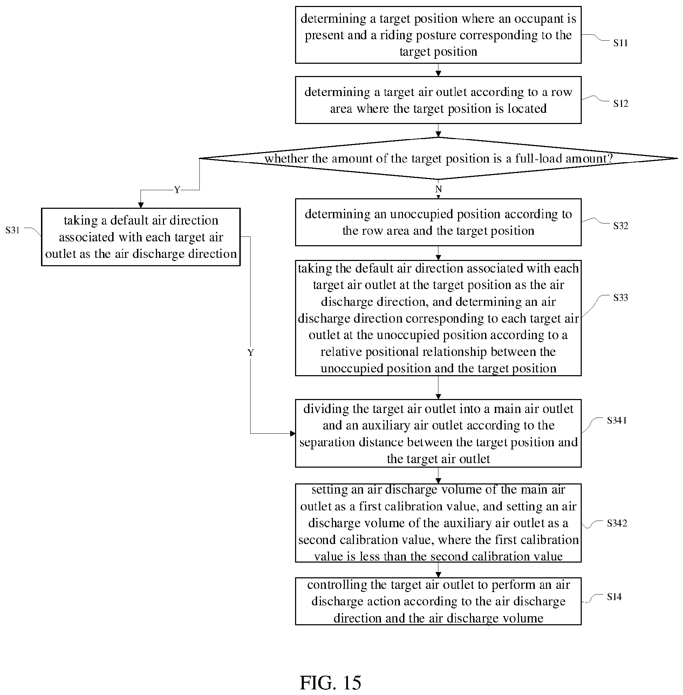

Referring to FIG. 15, step S34 includes:
step S341, dividing the target air outlet into a main air outlet and an auxiliary air outlet according to the separation distance between the target position and the target air outlet; and
step S342, setting an air discharge volume of the main air outlet as a first calibration value, and setting an air discharge volume of the auxiliary air outlet as a second calibration value, where the first calibration value is less than the second calibration value.

In an embodiment, the separation distances between different types of target air outlets and the target position are obtained and sorted. The type of the target air outlet closest to the target position is set as the main air outlet, which plays a major role in the air circulation of the target position, such as air outlets 1 and 2 in FIG. 4. Other target air outlets are set as auxiliary air outlets, which play an auxiliary role in the air circulation of the target position, such as air outlets 3 and 4 in FIG. 4.

Further, the air volume of the main air outlet is set as the first calibration value, such as the middle gear, and the air volume of the auxiliary air outlet is set as the second calibration value, such as the minimum gear.

Through this division, the direction and intensity of air circulation can be better controlled, so as to provide a more comfortable air circulation effect and improve the comfort of occupants. In addition, this division method can also more accurately control the direction and intensity of air circulation, thereby reducing energy waste and automotive energy consumption.

In addition, after controlling the air outlet to work based on the above parameters, if the temperature difference at the target position is greater than the first preset temperature difference within the first preset period, it indicates that the current temperature is rising rapidly. At this time, it is necessary to adjust the air discharge volume of the auxiliary air outlet according to the preset increment until the temperature is stable, that is, the condition that the temperature difference is less than the second preset temperature difference within the second preset period is met.

Exemplarily, as shown in FIG. 4, the temperature measured by the temperature sensor at the driver's seat is obtained. If the current temperature is 0.5 degrees higher than the temperature thirty seconds ago, the air volume of auxiliary air outlets 3 and 4 is adjusted according to an increment of 0.1 cubic meters per minute until the measured temperature fluctuation is lower than 0.5 degrees within five minutes.

Such an arrangement can more accurately control the operation of the air conditioning system, avoid unnecessary energy waste, and thus achieve the effect of energy saving. Moreover, it can better meet the comfort needs of occupants. For example, when the temperature difference is greater than the preset value, increasing the air volume of the auxiliary air outlet can adjust the indoor temperature faster and improve the comfort of occupants.

It should be noted that when determining the air discharge direction and air discharge volume, the two dimensions of whether the seat is full and whether the posture is normal can be comprehensively considered.
(1) When the amount of the target positions is the full-load amount and all are occupants in the normal posture, the target air outlet is the first target air outlet determined in step S12; and the default air direction of each target air outlet is retained.
(2) When the amount of the target positions is the full-load amount and a non-normal posture exists, the target air outlet includes not only the first target air outlet determined in step S12, but also the second target air outlet associated with the non-normal posture; and the default air direction of each target air outlet is retained.
(3) When the amount of the target positions is the non-full-load amount and the occupant at the target position is in the normal posture, the target air outlet is the first target air outlet determined in step S12; and the air discharge directions of both the target position and the unoccupied position are set to the direction where the occupant is located.
(4) When the amount of the target positions is the non-full-load amount and the occupant at the target position is in the non-normal posture. On the one hand, on the basis of the first target air outlet determined in step S12, the air outlet at the unoccupied position is eliminated, and the remaining is the target air outlet at the target position. On the other hand, the second target air outlet associated with the non-normal posture is added, and the final result is the air outlet that needs to be opened. The air discharge directions of both the target position and the unoccupied position are set to the direction where the occupant is located.

Examples are as follows.
(1) As shown in FIG. 3, when both the driver seat and the co-pilot seat are occupied and both are in the normal posture, open air outlets 1, 2, 3 and 4, where air outlets 1 and 2 blow air to the driver, and air outlets 3 and 4 blow air to the co-pilot.
(2) When both the driver seat and the co-pilot seat are occupied and both are in non-normal postures, open air outlets 1, 2, 3, 4, 5, 6, 7, 8, 9 and 11, where 1, 2, 5, 6 and 9 blow air to the driver, and air outlets 3, 4, 7, 8 and 11 blow air to the co-pilot.
(3) When only the co-pilot is occupied and is in the normal posture, open air outlets 1, 2, 3 and 4, and blow air to the co-pilot.
(4) As shown in FIG. 8 and 9, when only the co-pilot is occupied is in the semi-recumbent posture, open air outlets 3, 4, 5, 6 and 9, and blow air to the co-pilot.

In a technical solution provided by this embodiment, the target air outlet that needs to be opened is determined according to the relationship between the target position and the seating area, and the air discharge direction and air discharge volume of the target air outlet are further determined according to the relative positional relationship and temperature. This solution provides a way to determine the air outlet operating parameters from the target position level. In terms of area division, the air outlet in the occupied area can be opened, and the air outlet in the unoccupied area can be closed, thereby avoiding unnecessary energy waste and improving the energy efficiency of the air conditioning system. In addition, flexibly determining the air discharge direction and air discharge volume according to the relative positional relationship and temperature can better meet the comfort needs of different positions in the seating area.

Exemplarily, the electric air outlet includes front air outlets 1, 2, 3 and 4 located in the instrument assembly, rear air outlets 5, 6, 7 and 8, and ceiling air outlets 9 and 10.
(1) As shown in FIG. 3, after the cockpit is started, personnel detection is performed. When only two front occupants are detected, air outlets 1 and 2 blow air to the left occupant, and air outlets 3 and 4 blow air to the right occupant.
(2) As shown in FIG. 4, when only the left occupant is detected, air outlets 1 and 2 blow air to the left occupant, and air outlets 3 and 4 also blow air to the left occupant. At this time, keep the air volume of air outlets 1 and 2 unchanged, and reduce the air volume of air outlets 3 and 4 to the minimum calibration value L. When the temperature measured by the temperature sensor is 0.5 degrees higher than the temperature thirty seconds ago, gradually increase the air volume of air outlets 3 and 4 until the temperature fluctuation of the temperature sensor within five minutes is lower than 0.5 degrees.
(3) As shown in FIG. 8 and 10, when the front seat moves backward or the backrest tilts, and the head X position is close to or exceeds the ceiling air outlet 9 on the same side, that is, the occupant is in a semi-recumbent posture, open the air outlet 9 on the same side. At this time, the air volume of air outlets 3 and 4 is reduced to M1, and the air volume of the air outlet 9 is adjusted to M2, where M1<M2, and M1+M2 is not higher than the initial air volume of air outlets 3 and 4, until the temperature of the temperature sensor reaches the level before the seat adjustment, so as to enhance comfort and reduce energy consumption.
(4) As shown in FIG. 10, for the rear air outlet located at the B-pillar or the central sub-instrument position on the side, open the air outlet 5 and air outlet 6 on the same side, and keep the initial air volume of air outlets 5 and 6 not higher than that of air outlets 3 and 4, and the adjustment conditions are the same as (2).
(5) If there is no occupant on the other side, close the air outlets 7 and 8 on the other side.
(6) If there is an occupant on the other side and the occupant is in the semi-recumbent posture, the implementation principle is the same as (4).
(7) If there is an occupant on the other side and the occupant is in the normal posture, open the front air outlet corresponding to the occupant's side.
(8) When the front seat rotates 180 degrees and the occupant faces backward:
   1) at this time, no human face is detected in front, and the air direction of the air outlet 4 is adjusted to avoid direct blowing on the headrest to the outer side;
   2) the air outlet 3 blows air to the left for compensation;
   3) open the air outlet 9 and face the occupant area, as shown in FIG. 11 and 13;
   4) at this time, the air volume of air outlets 3 and 4 is gradually reduced until the temperature of the headrest temperature sensor maintains the level before the seat adjustment; and
   5) when there is someone in the rear row, open the air outlet 10 and adjust the direction of the air outlet 10 following the rear occupant; for the air outlets arranged on the B-pillar and central sub-instrument, open the air outlet on the corresponding side and face the occupant on that side, as shown in FIG. 13.
(9) As shown in FIG. 5, for the left and right rear occupants, when there are occupants on both left and right rear sides, open the air outlet on the same side and face the corresponding occupant.
(10) As shown in FIG. 6, for the rear with only one side occupant, open the air outlet on the same side and face the occupant on the same side, and the air outlet on the other side blows air to the occupied side. The total air volume is automatically adjusted until the temperature at the rear headrest reaches the calibration value.

This solution associates the operating parameters of the air conditioning air outlet with different riding scenarios, so that in the actual application process, the appropriate operating parameters can be automatically determined according to the current position and posture of the user, which can not only meet the comfort needs of the user in different positions, but also reduce the operating energy consumption of the air conditioner.

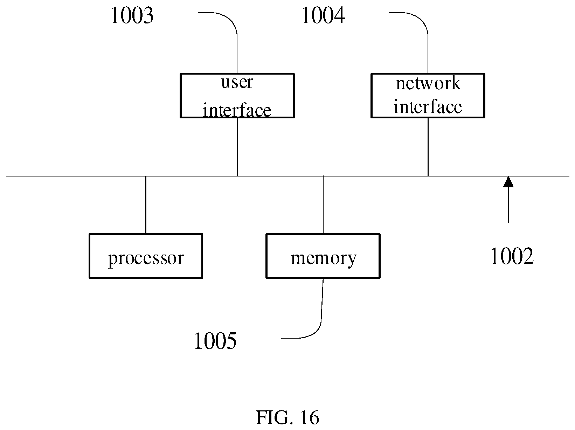

Refer to FIG. 16. FIG. 16 is a schematic structural view of an air discharge control device for automotive air conditioning involved in a hardware operating environment of embodiments of the present application.

As shown in FIG. 16, the air discharge control device for automotive air conditioning may include: a processor 1001, such as a central processing unit (CPU), a communication bus 1002, a user interface 1003, a network interface 1004, and a memory 1005. The communication bus 1002 is used to realize connection and communication among these components. The user interface 1003 may include a Display, an input unit such as a Keyboard, and the user interface 1003 may also include a standard wired interface and a wireless interface. The network interface 1004 may include a standard wired interface and a wireless interface (such as a WIreless-FIdelity (WI-FI) interface). The memory 1005 may be a high-speed Random Access Memory (RAM) memory, or a stable Non-Volatile Memory (NVM), such as a disk memory. The memory 1005 may also be an independent storage device from the aforementioned processor 1001.

Those skilled in the art can understand that the structure shown in FIG. 16 does not constitute a limitation on the air discharge control device for automotive air conditioning, and may include more or fewer components than those shown in the figure, or combine some components, or arrange different components.

As shown in FIG. 16, the memory 1005 as a storage medium may include an operating system, a data storage module, a network communication module, a user interface module, and an air discharge control program for automotive air conditioning.

In the air discharge control device for automotive air conditioning shown in FIG. 16, the network interface 1004 is mainly used for data communication with other devices; the user interface 1003 is mainly used for data interaction with users; the processor 1001 and the memory 1005 in the air discharge control device for automotive air conditioning of the present application can be set in the air discharge control device for automotive air conditioning, and the air discharge control device for automotive air conditioning calls the air discharge control program for automotive air conditioning stored in the memory 1005 through the processor 1001, and executes the air discharge control method for automotive air conditioning provided by the embodiment of the present application.

An embodiment of the present application provides a computer-readable storage medium, on which a computer program is stored, and when the computer program is run by a processor, the steps in any embodiment of the above-mentioned air discharge control method for automotive air conditioning are implemented.

Since the embodiments of the computer-readable storage medium correspond to the embodiments of the method, reference may be made to the description of the embodiments of the method for the embodiments of the computer-readable storage medium, and details are not repeated herein.

It should be noted that, in this document, the terms "include", "comprise" or any other variants thereof are intended to cover non-exclusive inclusion, so that a process, method, article or system including a series of elements includes not only those elements, but also other elements not explicitly listed, or elements inherent to such process, method, article or system. Without more restrictions, an element defined by the statement "including a..." does not exclude the existence of other identical elements in the process, method, article or system that includes the element.

The serial numbers of the embodiments of the present application are only for description, and do not represent the advantages or disadvantages of the embodiments.

Through the description of the above embodiments, those skilled in the art can clearly understand that the method of the above embodiments can be implemented by means of software plus a necessary general hardware platform, and of course, can also be implemented by hardware, but in many cases the former is a better implementation. Based on this understanding, the technical solution of the present application, essentially or the part that contributes to the prior art, can be embodied in the form of a software product. The computer software product is stored in a storage medium as mentioned above (such as ROM/RAM, magnetic disk, optical disk), including several instructions to enable a terminal device (which can be a mobile phone, computer, server, or network device, etc.) to execute the methods described in various embodiments of the present application.

The above are only the embodiments of the present application, and do not limit the scope of the present application. All equivalent structures or equivalent process transformations made by using the contents of the description and drawings of the present application, or directly or indirectly applied in other related technical fields, are all included in the scope of the present application in the same way.

## Claims

1. An air discharge control method for automotive air conditioning, **characterized by** comprising following steps:
determining a target position where an occupant is present and a riding posture corresponding to the target position;
determining a target air outlet according to a row area where the target position is located;
determining an air discharge direction and an air discharge volume corresponding to each target air outlet according to the target position and/or the riding posture; and
controlling the target air outlet to perform an air discharge action according to the air discharge direction and the air discharge volume.

2. The air discharge control method for automotive air conditioning according to claim 1, wherein the step of determining the air discharge direction and the air discharge volume corresponding to each target air outlet according to the target position and/or the riding posture comprises:
in response to that the riding posture is a normal posture, determining the air discharge direction and the air discharge volume corresponding to each target air outlet according to the target position and/or the normal posture; and
in response to that the riding posture is a non-normal posture, adjusting the target air outlet according to associated parameters of the non-normal posture, and determining the air discharge direction and the air discharge volume corresponding to each target air outlet.

3. The air discharge control method for automotive air conditioning according to claim 1, wherein the step of determining the air discharge direction and the air discharge volume corresponding to each target air outlet according to the target position and/or the riding posture comprises:
in response to that an amount of the target position is a full-load amount, taking a default air direction associated with each target air outlet as the air discharge direction;
in response to that the amount of the target position is a non-full-load amount, determining an unoccupied position according to the row area and the target position;
taking the default air direction associated with each target air outlet at the target position as the air discharge direction, and determining an air discharge direction corresponding to each target air outlet at the unoccupied position according to a relative positional relationship between the unoccupied position and the target position; and
determining the air discharge volume according to a separation distance between the target position and the target air outlet.

4. The air discharge control method for automotive air conditioning according to claim 3, wherein the step of determining the air discharge volume according to the separation distance between the target position and the target air outlet comprises:
dividing the target air outlet into a main air outlet and an auxiliary air outlet according to the separation distance between the target position and the target air outlet; and
setting an air discharge volume of the main air outlet as a first calibration value, and setting an air discharge volume of the auxiliary air outlet as a second calibration value, wherein the first calibration value is less than the second calibration value.

5. The air discharge control method for automotive air conditioning according to claim 4, wherein after the step of controlling the target air outlet to perform the air discharge action according to the air discharge direction and the air discharge volume, the method further comprises:
in response to that a temperature difference at the target position is greater than a first preset temperature difference within a first preset period, adjusting the air discharge volume of the auxiliary air outlet according to a preset increment until the temperature difference at the target position is less than a second preset temperature difference within a second preset period.

6. The air discharge control method for automotive air conditioning according to claim 1, wherein the target air outlet comprises at least one of a front air outlet, a ceiling air outlet and a rear air outlet.

7. The air discharge control method for automotive air conditioning according to claim 6, wherein after the step of controlling the target air outlet to perform the air discharge action according to the air discharge direction and the air discharge volume, the method further comprises:
in response to detecting that the riding posture is switched to a reverse posture, determining a headrest area associated with the target position; and
setting an air discharge direction of the front air outlet to an outer side of the headrest area, and setting an air discharge direction of other target air outlets as a center of the headrest area.

8. The air discharge control method for automotive air conditioning according to claim 1, wherein the step of determining the target position where an occupant is present and the riding posture corresponding to the target position comprises:
acquiring seat weighing data and image collection data of all areas;
determining the target position where the occupant is present according to a weight change of the seat weighing data; and
determining the riding posture corresponding to the target position according to a face detection in the image collection data.

9. The air discharge control method for automotive air conditioning according to claim 1, wherein the step of determining the air discharge direction and the air discharge volume corresponding to each target air outlet according to the target position and/or the riding posture comprises:
in response to that an amount of target positions is a full-load amount and all occupants are in normal postures, the target air outlet is a first target air outlet determined according to the row area where the target position is located.

10. The air discharge control method for automotive air conditioning according to claim 1, wherein the step of determining the air discharge direction and the air discharge volume corresponding to each target air outlet according to the target position and/or the riding posture comprises:
in response to that an amount of target positions is a full-load amount and a non-normal posture exists, the target air outlet comprises a first target air outlet determined according to the row area where the target position is located and a second target air outlet associated with the non-normal posture.

11. The air discharge control method for automotive air conditioning according to claim 1, wherein the step of determining the air discharge direction and the air discharge volume corresponding to each target air outlet according to the target position and/or the riding posture comprises:
in response to that an amount of target positions is a non-full-load amount and an occupant at the target position is in a normal posture, the target air outlet is a first target air outlet determined according to the row area where the target position is located.

12. The air discharge control method for automotive air conditioning according to claim 1, wherein the step of determining the air discharge direction and the air discharge volume corresponding to each target air outlet according to the target position and/or the riding posture comprises:
in response to that an amount of target positions is a non-full-load amount and an occupant at the target position is in a non-normal posture, eliminating an air outlet at an unoccupied position and taking a remaining air outlet as the target air outlet at the target position on a basis of a first target air outlet determined according to the row area where the target position is located.

13. An air discharge control device for automotive air conditioning, **characterized by** comprising: a memory, a processor, and an air discharge control program for automotive air conditioning stored on the memory and operable on the processor, wherein the air discharge control program for automotive air conditioning is configured to implement the steps of the air discharge control method for automotive air conditioning according to any one of claims 1 to 12.

14. A computer-readable storage medium, **characterized in that** an air discharge control program for automotive air conditioning is stored on the computer-readable storage medium, wherein the air discharge control program for automotive air conditioning is executed by a processor to implement the steps of the air discharge control method for automotive air conditioning according to any one of claims 1 to 12.
